# EUROPEAN PATENT APPLICATION

(11) **EP 1 986 447 A1**
(43) Date of publication of application: **29.10.2008**
(21) Application number: 06840634.7
(22) Date of filing: 25.12.2006
(51) Int. Cl.: H04Q 7/20

(54) **METHOD AND SYSTEM FOR SENDING SHORT MESSAGE, AND GROUP MAIN SWITCHBOARD**

(30) Priority: 15.02.2006 CN 200610033704
(71) Applicant: Huawei Technologies Co., Ltd., Longgang District, Shenzhen, Guangdong 518129 (CN)
(72) Inventor: REN, Zhibin, Guangdong 518129 (CN); LI, Guihua, Guangdong 518129 (CN); SUN, Zhihong, Guangdong 518129 (CN); WU, Yongneng, Guangdong 518129 (CN)
(74) Representative: Hengelhaupt, Jürgen
(86) International application number: PCT/CN2006/003583
(87) International publication number: WO 2007/093108

(57) **Abstract**

A method, a system and a Virtual Private Branch Exchange (VPBX) for sending short messages, users in a group can send short messages to each other by using a special service number plus an extension number; users in a group can send short messages to users outside the group by entering the special service number plus a called number; and users outside a group can send short messages to users in the group by using the main number of the group plus an extension number. Short messages can be sent between users in the same group or between users in the group and users outside the group by using pseudo numbers, this protects the privacy of the numbers of users in a group and breaks through the limitation that only users in the same VPMN group can use pseudo numbers to send short messages to each other; users in a group communicate with users outside the group through short messages using the main number of the group plus an extension number, a unified service window is open to external users and a good image is set up for the group. In addition, the interaction with the intelligent network for the translation of the calling number and the called number of a short message is avoided, thus reducing the impact of the service system on the intelligent network.

## Description

### FIELD OF THE INVENTION

The present invention relates to communication technologies, in particular, to a method, a system and a Virtual Private Branch Exchange (VPBX) for sending short messages based on a Virtual Private Mobile Network (VPMN).

### BACKGROUND

At present, a method for sending short messages by using VPMN short numbers is widely applied. VPMN short numbers are generally referred to as extension numbers, which are used for communications between users in the same VPMN and comprise fewer digits than real terminal user numbers. This method includes the following steps.

In step 1, a sender originates a short message destined to a VPMN short number. The short message is sent via a Mobile Switching Center (MSC) to a Short Message Service Center (SMSC).

In step 2, the SMSC selects a route based on the destination number of the short message and transfers the short message to an Internet Short Message Gateway (ISMG).

In step 3, the ISMG sends an authentication request and a VPMN short number translation request to a Service Control Point (SCP) on this route according to a route based on the destination address of the short message. Upon receipt of a reply from the SCP, the ISMG extracts the short message and sends it to the SMSC.

In step 4, the SMSC obtains the routing data about the destination address of the short message from a Home Location Register (HLR) and transfers the short message via the MSC to the recipient.

The above method has the following disadvantages:
VPMN short messages can be sent only between users in the same VPMN group. Users in a VPMN group and users outside the VPMN group cannot send short messages to each other by using VPMN short numbers, and therefore VPMN short messages cannot meet the requirement that users in the VPMN group communicate with outside ones.
VPMN short numbers are translated by an intelligent network. This results in a heavier load of the intelligent network. In particular, the intelligent network will be impacted when there is a large amount of the short message traffic.

### SUMMARY

The present invention provides a method for sending short messages, so that short messages can be sent between users in a group or between a user in a group and a user outside the group by using pseudo numbers. In addition, the interaction with the intelligent network for the translation of the calling number and the called number of a short message is avoided, thus reducing the impact of the service system on the intelligent network.

A method for sending short messages according to an embodiment of the present invention includes the following steps: sending a short message originated by a calling terminal to a home short message service center (SMSC) of the calling terminal, a called number of the short message being a pseudo number; sending the short message to a Virtual Private Branch Exchange (VPBX), when the SMSC determining the called number of the short message from the calling terminal is the pseudo number; translating, by the VPBX, the called number of the short message into a long number of the called terminal, and sending the translated short message to the SMSC, the long number being a Mobile Station International ISDN Number (MSISDN); receiving, by the SMSC, the translated short message, and sending the translated short message to the called terminal according to the called number of the translated short message.

The present invention also provides a system for sending short messages, including a Mobile Switching Center (MSC), a Short Message Service Center (SMSC) and a Virtual Private Branch Exchange (VPBX); the MSC is configured to receive a short message from a calling terminal, and sending the short message to the home SMSC of the calling terminal, a called number of the short message being a pseudo number; the SMSC is configured to send the short message whose called number is the pseudo number from the MSC to the VPBX, receive the translated short message transmitted from the VPBX, and send the translated short message to a called terminal according to the called number of the translated short message; the VPBX is configured to receive the short message from the SMSC, translate the called number of the short message into a long number of the called terminal, and send the translated short message to the SMSC.

The present invention also provides a VPBX that includes a receiving module, a translation module and a sending module; the receiving module is configured to receive each short messages from the SMSC, the called number of the short message is a pseudo number; the translation module is configured to translate a called number of the short message received by the receiving module into a long number of a called terminal; the sending module is configured to send the short message translated by the translation module to a Short Message Service Center (SMSC).

The embodiments of the present invention have the following advantages: a user in a VPMN group and a user outside the VPMN group can send short messages to each other by using a pseudo number. The pseudo number may be a special service number plus an extension number or may be the main number of the group plus an extension number. This breaks through the limitation of conventional technologies that only users in the same VPMN group can use pseudo numbers to send short messages to each other. The VPBX independently undertakes the translation of short numbers and long numbers of short message senders and recipients. The translation efficiency is high and the translation does not affect the intelligent network or other systems.

### BRIEF DESCRIPTION OF THE DRAWINGS

Figure 1 shows a networking topology of the VPBX service involved in the method for sending short messages according to an embodiment of the present invention;

Figure 2 shows a flowchart for a user in a group to send a short message to another user in the same group in the method for sending short messages according to an embodiment of the present invention;

Figure 3 shows a flowchart for a user in a group to send a short message to a user outside the group in the method for sending short messages according to an embodiment of the present invention; and

Figure 4 shows a flowchart for a user outside a group to send a short message to a user in the group in the method for sending short messages according to an embodiment of the present invention.

### DETAILED DESCRIPTION

The VPBX service is based on the VPMN. In this service, a main number is assigned to each group user, thus constructing a brand-new enterprise communication portal for each group user. A unique extension number (namely a short number) is allocated to each terminal in a group in the VPBX service. The VPBX provides numerous services, including the group address list, business consultation, call transfer, enterprise services and VIP hotlines. In the VPBX service, group users are not necessarily VPMN users.

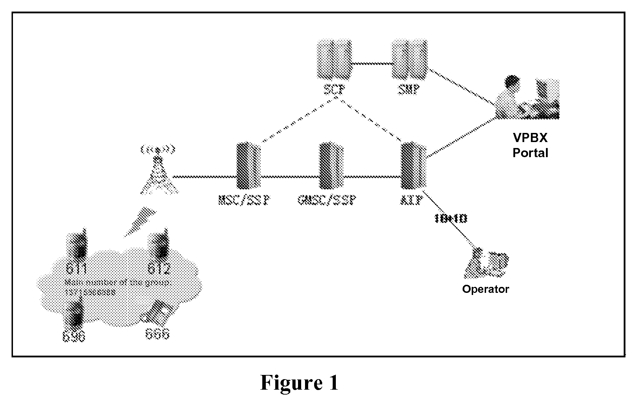

To perform the VPBX service, mobile intelligent network devices such as a Service Control Point (SCP) and an Advanced Intelligent Peripheral (AIP) need to be deployed. Figure 1 shows a networking topology of the VPBX service.

As shown in Figure 1, the AIP stores the address lists of all the groups and cooperates with the SCP to perform number query and call transfer. The VPBX Portal maintains the address lists of these groups.

According to an embodiment of the present invention, pseudo numbers are used for sending short messages between users in a group and users outside the group. A pseudo number may be a special service number plus an extension number or may be a main number of a group plus an extension number.

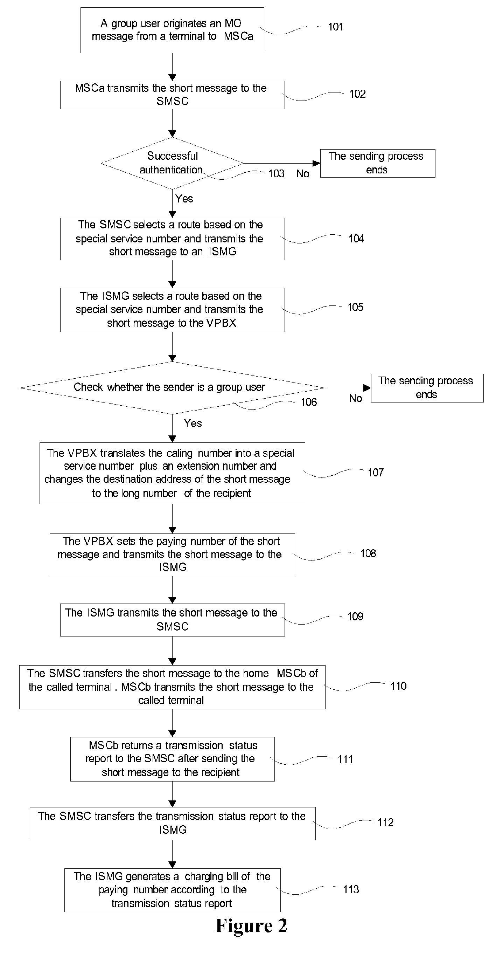

Figure 2 shows the flowchart for a user in a group to send a short message to another user in the same group in the method for sending short messages according to an embodiment of the present invention, including the following steps.

In step 101, a group user originates a Mobile Originated (MO) short message from a terminal to an MSCa. Suppose the extension number of the terminal is 6000. The destination address of the short message is a special service number such as 900 plus an extension number 6001. The calling number of the short message is a long number 13860007000 of a sender; the destination number is the number of a recipient. The sender is a calling terminal; the recipient is a called terminal. The long number of the sender is the Mobile Station International Integrated Services Digital Network Number (MSISDN) of the calling terminal.

In step 102, the MSCa transmits the short message to the SMSC.

In step 103, the SMSC sends a request for authenticating the sender to the home SCP according to the number segment of the calling number 13860007000. The next step follows if the authentication succeeds, or the message transmission process ends if the authentication fails.

In step 104, the SMSC selects a route based on the special service number 900 and transmits the short message to an ISMG.

In step 105, the ISMG selects a route based on the special service number 900 and transmits the short message to the VPBX Portal.

In step 106, the VPBX Portal authenticates the calling number 13860007000 and checks whether the sender is a group user. If the sender is a group user, step 107 follows. If the sender is not a group user, the VPBX Portal deletes the short message and sends an authentication failure message to the ISMG. The ISMG transmits the authentication failure message via the SMSC to the sender and then the short message sending process ends.

In step 107, the VPBX Portal queries a member information database to find the extension number 6000 of the calling terminal 13860007000, translates the calling number of the short message into a special service number 900 plus an extension number 600, then queries the member information database to find the long number 13862347025 corresponding to the extension number 6001 of the recipient, and changes the destination address of the short message to the long number 13862347025.

In step 108, the VPBX Portal sets the paying number of the short message, the paying number can be set to the calling number 13860007000 or the main number 13800000000 of the group, and transmits the short message to the ISMG.

In step 109, the ISMG transmits the short message to the SMSC.

In step 110, the SMSC transmits the short message to a home MSCb of the called terminal. Then the MSCb transmits the short message to the called terminal 13862347025. The calling number of the short message is presented as 9006000, a special service number plus an extension number of the sender.

In step 111, the MSCb returns a transmission status report to the SMSC after sending the short message to the recipient.

In step 112, the SMSC transfers the transmission status report to the ISMG.

In step 113, the ISMG generates a charging bill of the paying number according to the transmission status report.

In the method for sending short messages according to the above embodiment, short messages can be sent between users in a group by using pseudo numbers. A pseudo number is a special service number plus an extension number.

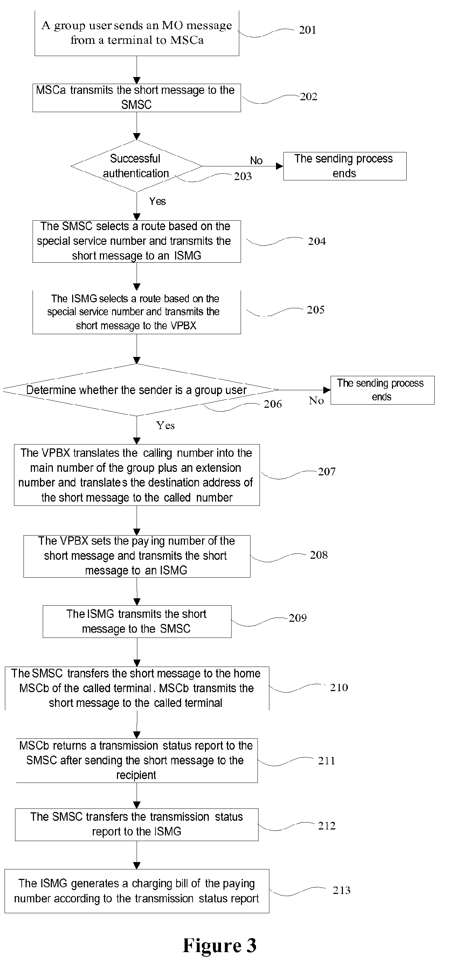

Figure 3 shows the flowchart for a user in a group to send a short message to a user outside the group in the method for sending short messages according to an embodiment of the present invention, including the following steps.

In step 201, a group user sends a Mobile Originated (MO) short message to an MSCa by using a terminal. Suppose that the extension number of the terminal is 6000. The destination address of the short message is a special service number such as 900 plus the called number 13450006000. The calling number of the short message is the MSISDN 13860007000 of a user in the group.

In step 202, the MSCa transmits the short message to the SMSC.

In step 203, the SMSC sends a request for authenticating the sender to the home SCP of the sender according to the number segment of the calling number 13860007000. The next step follows if the authentication succeeds, or the short message sending process ends if the authentication fails.

In step 204, the SMSC selects a route based on the special service number 900 and transmits the short message to an ISMG.

In step 205, the ISMG selects a route based on the special service number 900 and transmits the short message to the VPBX Portal.

In step 206, the VPBX Portal authenticates the calling number 13860007000 and checks whether the sender is a group user. If the sender is a group user, step 207 follows. If the sender is not a group user, the VPBX Portal deletes the short message and sends an authentication failure message to the ISMG. The ISMG transmits the authentication failure message via the SMSC to the sender and then the short message sending process ends.

In step 207, the VPBX Portal queries the member information database to find the main number 13800000000 of the group to which the sender 13860007000 belongs and the extension number 6000 of the sender, and translates the calling number of the short message into 138000000006000, which is the main number of the group plus an extension number of the sender, and then translates the destination address of the short message into the called number 13450006000.

In step 208, the VPBX Portal sets the paying number of the short message; the paying number can be set to the calling number 13860007000 or the main number 13800000000 of the group, and transmits the short message to an ISMG.

In step 209, the ISMG transmits the short message to the SMSC.

In step 210, the SMSC transfers the short message to a home MSCb of the called terminal. Then the MSCb transmits the short message to the called terminal 13450006000. The calling number of the short message is presented as 138000000006000, which is the main number of the group plus the extension number of the sender.

In step 211, the MSCb returns a transmission status report to the SMSC after sending the short message to the recipient.

In step 212, the SMSC transfers the transmission status report to the ISMG.

In step 213, the ISMG generates a charging bill of the paying number according to the transmission status report.

In the method for sending short messages according to the above embodiment of the present invention, short messages can be sent by a user in a group to a user outside the group by using a pseudo number. The pseudo number is a special service number plus the called number. The method also applies to the sending short messages between users in the same group, and the implementation process is almost the same as described in Figure 3, except that the called number of a short message is the long number of a user in the group.

In the method for sending short messages according to the above embodiment of the present invention, short messages can be sent by a user in a group to a user outside the group by using a pseudo number. The pseudo number is a special service number plus the called number. The method also applies to the sending short messages between users in the same group .and the implementation process is almost the same as described in Figure 3, except that the called number of a short message is the long number of a user in the group.

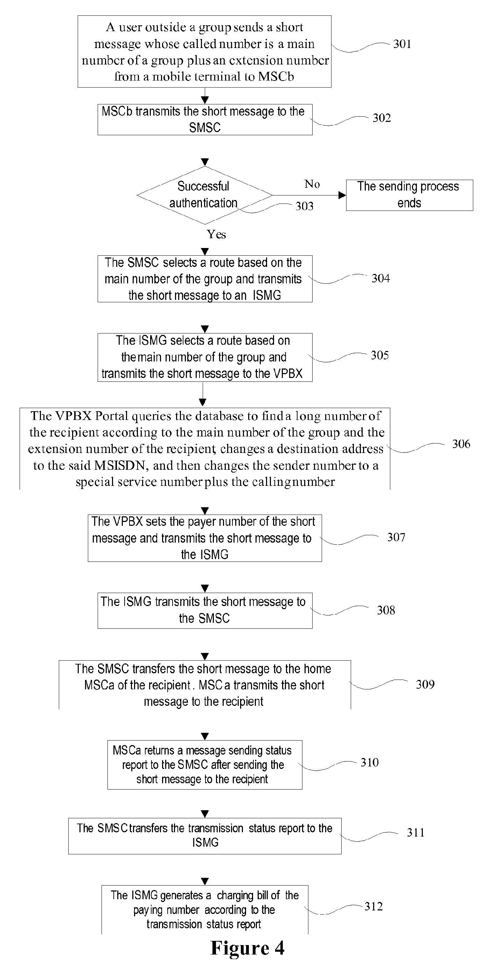

Figure 4 shows the flowchart for a user outside a group to send a short message to a user in the group in the method for sending short messages according to an embodiment of the present invention, including the following steps.

In step 301, a user outside a group sends a short message to an MSCb by using a mobile terminal. The long number of the mobile terminal is 13450006000. The called number of the short message is 13800000006000, which is the main number of the group plus an extension number.

In step 302, the MSCb transmits the short message to the SMSC.

In step 303, the SMSC sends a request for authenticating the sender to the home SCP of the sender according to the number segment of a calling number 13450006000. The next step follows if the authentication succeeds, or an authentication failure message is returned to the sender and the short message sending process ends if the authentication fails.

In step 304, the SMSC selects a route based on the main number 13800000000 of the group to which the recipient belongs and transmits the short message to the ISMG corresponding to the main number 13800000000.

In step 305, the ISMG selects a route based on the main number 13800000000 of the group and transmits the short message to the VPBX Portal.

In step 306, the VPBX Portal queries the database to find the long number 13860007000 according to the main number 13800000000 of the group and the extension number 6000, changes a destination address of the short message to the long number 13860007000, and then changes the calling number of the short message to 90013450006000, which is a special service number plus the calling number.

In step 307, the VPBX Portal sets the paying number of the short message; the paying number can be set to the calling number 13450006000 or the main number 13800000000 of the group, and transmits the short message to an ISMG.

In step 308, the ISMG transmits the short message to the SMSC.

In step 309, the SMSC transmits the short message to the MSCa of the destination address. Then the MSCa transmits the short message to the called number 13860007000. The calling number of the short message is presented as 90013450006000, which is a special service number plus the calling number.

In step 310, the MSCa returns a transmission status report to the SMSC.

In step 311, the SMSC transfers the transmission status report to the ISMG.

In step 312, the ISMG generates a charging bill of the paying number according to the transmission status report.

In the method for sending short messages according to the above embodiment of the present invention, short messages can be sent by a user outside a group to a user in the group by using a pseudo number. The pseudo number is the main number of the group plus the extension number of the recipient. The method also applies to send short messages between users in the same group, and the implementation process is almost the same as described in Figure 4, except that the calling number of a short message is the long number of the user in the group.

A system for sending short messages according to an embodiment of the present invention mainly comprises a Mobile Switching Center (MSC), a Short Message Service Center (SMSC) and a Virtual Private Branch Exchange (VPBX).

The MSC receives short messages from users in or outside a group and transmits the short messages to a home SMSC of a calling terminal. For a short message received by the MSC, the calling number is the long number of the short message sender, and the called number is a pseudo number.

The SMSC receives short messages from the MSC. When the calling number of a short message is the long number of the short message sender and the called number is a pseudo number, the SMSC transmits the short message to the VPBX. Here, the VPBX may transmit the short message via an Internet Short Message Gateway (ISMG) to the VPBX. Upon receipt of the short message transmitted by the VPBX, the SMSC transmits the short message to the called terminal. The procedure for the SMSC to transmit the short message from the VPBX to the called terminal can be implemented by a process in existing technologies, for example, the SMSC transfers the short message to a home MSC of the called terminal, the home MSC of the called terminal transmits the short message to the called terminal, and then returns a transmission status report to the SMSC.

The SMSC may also initiate an authentication request to a home SCP after receiving a short message from the MSC. If the authentication succeeds, the SMSC transmits the received short message to the VPBX. If the authentication fails, the short message sending process directly ends.

The VPBX receives short messages from the SMSC. When receiving a short message whose calling number is a long number of the sender and whose called number is a pseudo number, the VPBX translates the called number into the long number and translates the calling number into a pseudo number, and then transmits the translated short message to the SMSC. The VPBX may transmit the translated short message to an ISMG so that the ISMG transfers the translated short message to the SMSC. After sending the short message to the SMSC, the VPBX may set a paying number of the short message.

The VPBX translates the calling number and the called number of a short message in one of the following three scenarios.

In scenario 1, the called number of the short message from the SMSC is a special service number plus the extension number of the recipient, and the calling number is the long number of the sender. The VPBX searches for the extension number corresponding to the calling number and the long number corresponding to the extension number of the recipient from the member information database, translates the calling number of the short message into a special service number plus the aforesaid searched extension number of the sender, and translates the called number of the short message into the aforesaid searched long number.

In scenario 2, the called number of the short message from the SMSC is a special service number plus the long number of the recipient, and the calling number is the long number of the sender. The VPBX searches for the extension number of the calling terminal according to the long number of the sender from the member information database, translates the calling number of the short message into the main number of the group plus the aforesaid searched extension number of the sender, and translates the called number of the short message into the long number of the recipient.

In scenario 3, the called number of the short message from the SMSC is the main number of the group plus the extension number of the recipient, and the calling number is the long number of the sender. The VPBX searches for the long number of the recipient according to the extension number of the recipient from the member information database, translates the called number of the short message into the aforesaid searched long number of the recipient, and translates the calling number of the short message into a special service number plus the long number of the sender.

The VPBX provided according to an embodiment of the present invention comprises a receiving module, a translation module and a sending module.

The receiving module receives short messages from the SMSC. These short messages may be sent by the SMSC via an ISMG. For a short message received by the receiving module, the calling number is the long number of the short message sender and the called number is a pseudo number.

The translation module includes a member information database and performs number translation by querying the member information database. The general translation principles of the translation module are to translate the called number of a received short message into the long number and to translate the calling number of the short message into the pseudo number. The translation module may translate the calling number and the called number of a short message in one of the three scenarios previously described for the method and system for sending short messages according to the embodiments of the present invention. The translation module can also set a paying number of a short message.

The sending module transmits the short messages translated by the translation module to the SMSC. The sending module may also transmit the translated short messages to an ISMG so that the ISMG transfers the short messages sent from the VPBX to the SMSC.

According to the embodiments of the present invention, the VPBX can independently undertake the translation of short numbers and long numbers of the short message sender and receiver at high efficiency without affecting the intelligent network or other systems. When users in a group send or receive short messages to or from users outside the group by using the main number of the group plus an extension number, a good image is set up for the group. In addition, the short message fees can be configured and may be paid completely by the group or borne by users outside the group. Therefore, the interests of both the group and the group members are well guaranteed. Moreover, the personal information of a group user is not revealed during the transmission of a short message, thus avoiding the chum of external user resources in the event of changes of internal users of the group.

While this invention has been particularly shown and described by reference to exemplary embodiments thereof, it will be understood by those skilled in the art that various changes in form and detail may be made therein without departing from the spirit and scope of the invention as defined by the appended claims.

## Claims

1. A method for sending a short message, **characterised in**, comprising:
sending the short message from a calling terminal to a home short message service center (SMSC) of the calling terminal, wherein a called number of the short message is a pseudo number;
sending, by the SMSC, the short message to a Virtual Private Branch Exchange(VPBX), when the SMSC determines the called number of the short message from the calling terminal is the pseudo number;
translating, by the VPBX, the called number of the short message into a long number of a called terminal and sending the translated short message to the SMSC, wherein the long number is a number of Mobile Station International Integrated Services Digital Network ( MSISDN); and
receiving, by the SMSC, the translated short message, sending the translated short message to the called terminal according to the called number of the translated short message.

2. The method of claim 1, **characterised in**, wherein the called number of the short message from the calling terminal is a special service number plus an extension number of the called terminal, the calling number is a long number of the calling terminal, comprising:
sending, by the SMSC, the short message to the VPBX corresponding to the special service number, when detecting the called number of the short message from the calling terminal comprises the special service number;
searching for, by the VPBX, the extension number corresponding to the calling number , translating the calling number of the short message into the special service number plus the searched extension number;
searching for the long number corresponding to the extension number of the called terminal; and
translating the called number of the short message into the long number of the called terminal.

3. The method of claim 1, **characterised in**, wherein the called number of the short message from the calling terminal is a special service number plus a long number of the called terminal, the calling number is the long number of the calling terminal, comprising:
sending, by the SMSC, the short message to the VPBX corresponding to the special service number, when detecting the called number of the short message sent by the calling terminal comprises the special service number;
translating, by the VPBX, the called number of the short message into the long number of the called terminal; and
searching for, by the VPBX, the extension number corresponding to the calling number and translating the calling number of the short message into a main number of the group plus the extension number of the calling terminal.

4. The method of claim 1, **characterised in**, wherein the called number of the short message sent by the calling terminal is a main number of the group plus an extension number of the called terminal, the calling number is the long number of the calling terminal, comprising:
sending, by the SMSC, the short message to the VPBX corresponding to the main number of the group, when detecting the called number of the short message sent by the calling terminal comprises the number of the VPBX;
searching for, by the VPBX, the long number corresponding to the extension number of the called terminal and translating the called number of the short message into the long number of the called terminal; and
translating, by the VPBX, the calling number of the short message into a special service number plus the long number of the calling terminal.

5. The method of claim 1 or 2 or 3 or 4, **characterised in**, wherein the process of sending, by the SMSC, the short message to the VPBX comprising:
initiating, by the SMSC, an authentication request to a home service control point (SCP) of a sender; and
sending the short message to the VPBX, when the authentication succeeds.

6. The method of claim 1 or 2 or 3 or 4, **characterised in**, wherein the process of sending, by the SMSC, the short message to the VPBX comprising:
Sending, by the SMSC, the short message to the VPBX via an Internet short message gateway (ISMG).

7. The method of claim 1 or 2 or 3 or 4, **characterised in**, further comprising:
setting, by theVPBX, a number of a paying party of the short message; and
generating, by a charged party, the charging bill of the number of the paying party according to the number of the paying party of the short message.

8. The method of claim 1 or 2 or 3 or 4, **characterised in**, wherein the process of sending, by the VPBX, the translated short message to the called terminal via the SMSC comprising:
sending, by the VPBX, the short message to the SMSC via ISMG;
transferring, by the SMSC, the short message to the home MSC of the called terminal; and
sending, by the home MSC of the called terminal, the short message to the called terminal and returning the sending status report to the SMSC.

9. A system for sending a short message, **characterised in**, comprising a mobile switching centre (MSC), a short message service centre (SMSC) and a Virtual Private Branch Exchange (VPBX);
wherein the MSC is configured to receive the short message sent by a calling terminal and transmit the short message to the home SMSC of the calling terminal; further wherein the called number of the short message is a pseudo number;
wherein the SMSC is configured to send the short message with the called number being the pseudo number from the MSC to the VPBX, receive the translated short message from the VPBX, and send the translated short message from the VPBX according to the called number of the translated short message; and
wherein the VPBX is configured to receive the short message from the SMSC, translate the called number of the short message into a long number of the called terminal, and send the translated the short message to the SMSC.

10. The system of claim 9, **characterised in**, wherein the pseudo number is a special service number plus an extension service number of the called terminal, the calling number is a long number of the calling terminal;
wherein the SMSC is configured to send the short message to the VPBX corresponding to the special service number when detecting that the called number of the short message sent by the calling terminal comprises the special service number; and
wherein the VPBX is configured to receive the short message, search for an extension number corresponding to the calling number, translate the calling number of the short message into the special service number plus the searched extension number corresponding to the calling number, search for the long number of a called terminal corresponding to the extension number of the called terminal, and translate the called number of the short message into the long number of the called terminal.

11. The system of claim 9, **characterised in**, wherein the pseudo number is a special service number plus a long number of the called terminal, the calling number is a long number of the calling terminal;
wherein the SMSC is configured to send the short message to the VPBX corresponding to the special service number when detecting that the called number of the short message sent by the calling terminal comprises the special service number; and
wherein the VPBX is configured to receive the short message, search for an extension number corresponding to the calling number, translate the calling number of the short message into a main number of a group plus the extension number of the calling terminal, and to translate the called number of the short message into the long number of the called terminal.

12. The system of claim 9, **characterised in**, wherein the pseudo number is a main number of a group plus an extension number of the called terminal, the calling number is the long number of the calling terminal;
wherein the SMSC is further configured to send the short message to the VPBX corresponding to the main number of the group when detecting that the called number of the short message sent by the calling terminal comprises the main number of the group; and
wherein the VPBX is further configured to receive the short message, search for the long number of the called terminal according to the extension number of the called terminal, translate the called number of the short message into the long number of the called terminal, and translate the calling number of the short message into the special service number plus the long number of the calling terminal.

13. A virtual private branch exchange (VPBX), **characterised in**, comprising:
a receiving module, configured to receive a short message from a short message service centre (SMSC); wherein a called number of the short message is a pseudo number;
a translation module, configured to translate the called number of the short message received by the receiving module into a long number of a called terminal; and
a sending module, configured to send a translated short message to the SMSC.

14. The virtual private branch exchange (VPBX) of claim 13, **characterised in**, wherein the called number of the short message received by the receiving module is a special service number plus an extension number of the called terminal, a calling number is a long number of the calling terminal; and
wherein the translation module is further configured to search for an extension number corresponding to the calling number, translate the calling number of the short message into the special service number plus the searched extension number, search for the long number corresponding to the extension number of the called terminal, and to translate the called number of the short message into the long number of the called terminal.

15. The virtual private branch exchange (VPBX) of claim 13, **characterised in**, wherein the called number of the short message received by the receiving module is a special service number plus a long number of the called terminal, a calling number is a long number of the calling terminal; and
the translation module is further configured to translate the called number of the short message into the long number of the called terminal, search for an extension number corresponding to the calling terminal, and to translate the calling number of the short message into a main number of a group plus the searched extension number of the calling terminal.

16. The virtual private branch exchange (VPBX) of claim 13, **characterised in**, wherein the called number of the short message received by the receiving module is a main number of a group plus an extension number of the called terminal, a calling number is a long number of the calling terminal; and
the translation module is further configured to search for the long number of the called terminal corresponding to the extension number of the called terminal, translate the called number of the short message into the long number of the called terminal, and to translate the calling number of the short message into a special service number plus the long number of the calling terminal.
